# EUROPÄISCHE PATENTSCHRIFT

(11) **EP 0 867 027 B1**
(45) Veröffentlichungstag und Bekanntmachung des Hinweises auf die Patenterteilung: **08.03.2000**
(21) Anmeldenummer: 96943045.3
(22) Anmeldetag: 05.12.1996
(51) Int. Cl.: G21C 13/00

(54) **DRUCKBEHÄLTER, INSBESONDERE EINER SIEDEWASSER-KERNKRAFTANLAGE**
PRESSURE VESSEL, IN PARTICULAR FOR A BOILING WATER NUCLEAR POWER STATION
CUVE SOUS PRESSION, NOTAMMENT POUR UNE CENTRALE NUCLEAIRE A EAU BOUILLANTE

(30) Priorität: 15.12.1995 DE 19547012; 19.02.1996 DE 19606089
(43) Veröffentlichungstag der Anmeldung: 30.09.1998
(73) Patentinhaber: SIEMENS AKTIENGESELLSCHAFT, 80333 München (DE); Hochtief Aktiengesellschaft, 60323 Frankfurt am Main (DE)
(72) Erfinder: MATTERN, Jean, D-65779 Fischbach (DE); ZEITZSCHEL, Günter, D-60431 Frankfurt am Main (DE); PFLUG, Volker, D-63505 Langenselbold (DE); HASELWANDER, Bernhard, D-61440 Oberursel (DE); HANSEN, Heribert, D-64342 Seeheim-Jugenheim (DE); KAPPEI, Werner, D-65824 Schwalbach (DE); BUTTE, Wolfgang, D-60323 Frankfurt am Main (DE)
(74) Vertreter: Epping, Wilhelm, Dr.-Ing.
(86) Internationale Anmeldenummer: EP9605451
(87) Internationale Veröffentlichungsnummer: WO9722974

(56) Entgegenhaltungen:
- GB-A- 1 422 839
- US-A- 3 713 968
- US-A- 4 518 561
- US-A- 4 752 439
- US-A- 5 309 489
- DATABASE WPI Section Ch, Week 9604 21.November 1995 Derwent Publications Ltd., London, GB; Class K05, AN 96-036597 XP002027249 & JP 07 306 287 A (ISHIKAWAJIMA HARIMA HEAVY IND) , 21.November 1995

## Beschreibung

Die Erfindung betrifft einen Druckbehälter, insbesondere als Sicherheitsbehälter einer Siedewasser-Kernkraftanlage

In der DE 33 26 585 A1 ist ein rotationssymmetrischer Sicherheitsbehälter für eine Kernkraftanlage beschrieben. Der Sicherheitsbehälter ist einschalig ausgeführt und hat eine Wandung, die aus mindestens zwei ineinander geschachtelten, sich gegenseitig umschließenden Schichten besteht, die aus Stahlblech gebildet sind. Die Zwischenräume zwischen benachbarten Schichten sind mit Beton ausgefüllt, wodurch die Lage der Schichten zueinander fixiert wird. Die Schichten sind über jeweilige Verbundmittel mit dem Beton verbunden. Zumindest die innere Schicht ist gasdicht ausgebildet. In einem Zwischenraum zwischen der inneren Schicht und der äußeren Schicht sind einzelne sich kreuzende stabförmige Elemente angeordnet, worunter eine Bewehrung aus Betonstabstahl zu verstehen ist. Ein mehrschichtiger Wandaufbau des Sicherheitsbehälters soll bei einer Rißbildung in zumindest einer der Schichten den Austritt radioaktiver Dämpfe und Gase verhindern. Die Ausführung dieses mehrschichtigen Wandaufbaus ist bezüglich des Stahlbaus, der Bewehrungstechnik und des Betoneinbaus außerordentlich kompliziert. Er birgt außerdem die Gefahr, daß in den von Stahlblechen umschlossenen Betonbereichen Anmachwasser verbleiben kann, das für die Hydration des Betons nicht benötigt wird oder durch Austrocknungseffekte nicht vollkommen entweichen kann. Bei hohen Temperaturen könnte ein hierdurch entstehender Wasserdampfdruck den Wandaufbau zerstören.

Aus der JP 7 306 287 ist ein Sicherheitsbehälter für eine Kernkraftanlage bekannt, bei dem zwischen seiner Außenwand und dem Reaktordruckbehälter eine weitere Schutzwand vorgesehen ist, so daß zwischen der Außenwand und der Schutzwand ein Zwischenraum gebildet ist. Der Zwischenraum reicht von der Bodenplatte bis zur Decke des Sicherheitsbehälters und ist durch eine horizontal verlaufende Trennebene in einen oberen und einen unteren Zwischenraum aufgeteilt. Mit dieser Konstruktion wird in erster Linie eine leichte Zugänglichkeit des Reaktordruckbehälters bei einer Inspektion erreicht.

Aus der US, 4,752,439 ist ein Sicherheitsbehälter für einen Hochtemperaturreaktor bekannt, der zwei im wesentlichen ineinander geschachtelte zylindrische Betonhüllen aufweist, wobei innerhalb des inneren Zylinders der Reaktordruckbehälter angeordnet ist. Es ist vorgesehen, daß auf dem inneren Zylinder ein Kühlmittelreservoir angeordnet ist. Für eine Kühlung des inneren Zylinders werden aus dem Kühlmittelreservoir innerhalb des inneren Zylinders angeordnete Leitungen gespeist.

Bei den aus der JP 7 306 287 und US 4,752,439 bekannten Sicherheitsbehältern sind keine besonderen Maßnahmen vorgesehen, die es erlauben, die Sicherheitsbehälter bei einer kompakten Ausführung für hohe Innendrücke auszulegen.

In dem Artikel "Reaktordruckbehälter aus Spannbeton" von J. Schöning, Beton 4/1983, wird ein zylindrischer Druckbehälter aus Spannbeton für einen gasgekühlten Hochtemperaturreaktor,
die Kernkraftanlage Hamm-Uentrop in der Bundesrepublik Deutschland, beschrieben. Dieser Reaktordruckbehälter ist für einen Betriebsdruck von 39,2 bar und einen Prüfdruck von 46,1 bar ausgelegt. Der Sicherheitsbehälter hat auf der Innenseite eine gasdichte Auskleidung aus Stahlblech, den sogenannten Liner. Der Sicherheitsbehälter hat Wände aus Beton, mit einer Wandstärke von 4,45 m, die sowohl in horizontaler als auch in vertikaler Richtung vorgespannt sind. Die Vorspannung des Betons mit Spannstahl ergibt einen volume nmäßig niedrigeren Bewehrungsgrad als eine schlaffe Bewehrung aus Betonstabstahl sowie eine verminderte Gefahr der Rißbildung. Hierdurch soll erreicht werden, daß eine Vielzahl konstruktiver Durchdringungen der Wände mit anlagentechnischen Vorrichtungen vergleichsweise einfach ausführbar ist.

In der EP 0 465 272 A1 ist ein Sicherheitsbehälter für einen Kernreaktor beschrieben. Der Sicherheitsbehälter umfaßt eine innere Auskleidung aus Stahl, eine sich daran nach außen hin anschließende Isolationsschicht, die wiederum von einer äußeren Betonschicht umschlossen wird. Bei der Betonschicht handelt es sich um eine Spannbetonschicht, die sowohl in horizontaler als auch in vertikaler Richtung mit Rohren durchzogen ist, in denen Vorspannelemente angeordnet sind. Die Betonschicht hat dabei eine Dicke von drei und mehr Metern und die Dicke der Isolationsschicht und der Stahlauskleidung beträgt zusammen etwa 50 cm, wobei die Dicke der Stahlauskleidung wesentlich geringer als die Dicke der Isolationsschicht ist.

Bei einem zylindrischen Sicherheitsbehälter mit einem Mantel aus Spannbeton, der sowohl horizontal als auch vertikal vorgespannt ist, wird durch die Vorspannung ein Druckspannungszustand erzeugt, der betragsmäßig größer als der in Folge eines Störfalles durch Druckaufbau entstehende Zugspannungszustand ist. Die relativ hohen Druckspannungen sind ständig vorhanden, sie werden aber nur in einem extrem unwahrscheinlichen Störfall mit sehr starken Druckaufbau im Inneren des Sicherheitsbehälters tatsächlich benötigt. Während eines normalen Betriebes hingegen treten keine übermäßigen Beanspruchungen in den Zylinderbereichen auf. Wegen der im Inneren des Betons herrschenden Spannungszustände ist eine ständige Überprüfung der aufgebrachten Vorspannkräfte erforderlich, um den Abbau der Vorspannung, z.B. infolge von Kriechen und Schwinden des Betons, infolge einer Relaxation oder gar Bruch des Spannstahles oder der Verankerung zu überwachen und die Einhaltung der vorgegebenen Grenzwerte zu gewährleisten.

Kugelförmige Sicherheitsbehälter in reiner Stahlbauweise mit Wandstärken bis zu 80 mm sind zwar in der Lage, einem Auslegungsdruck von über 5 bar standzuhalten, sind aber innerhalb eines Reaktorgebäudes selbsttragend auf einem Fundament gelagert und können keine weiteren Gebäudeauflasten abtragen, weil insbesondere eine direkte Belastung der relativ dünnen Stahlschalen von außen nicht möglich ist.

Aufgabe der Erfindung ist es, einen Druckbehälter anzugeben, der bei geringem Wartungsaufwand und einer kompakten Ausführung in der Lage ist, hohe Innendrücke aufzunehmen.

Erfindungsgemäß wird die Aufgabe durch einen Druckbehälter mit einer Betonstruktur gelöst, welche eine Bodenplatte und eine Deckenstruktur, einen Innenzylinder und einen den Innenzylinder umschließenden Außenzylinder umfaßt, wobei zwischen dem Innenzylinder und dem Außenzylinder ein Ringraum gebildet ist, in dem zumindest eine Zwischendecke kraftschlüssig und lasttragend mit dem Innenzylinder und dem Außenzylinder verbunden ist, wobei der Innenzylinder und der Außenzylinder auf der Bodenplatte angeordnet sind, sich jeweils entlang der Mittelachse des Druckbehälters erstrecken sowie mit der Dekkenstruktur kraftschlüssig und lasttragend verbunden sind, und wobei die Betonstruktur eine Bewehrung aus weitgehend regellos zueinander angeordneten metallischen Fasern und Betonstahlstäben aufweist.

Durch zwei Zylinder, die einen Ringraum einschließen und sowohl mit der Bodenplatte als auch der Deckenstruktur verbunden sind, bildet der Druckbehälter als Ganzes eine Tragstruktur, die bei geringen Wandstärken sowohl des Innenzylinders, des Außenzylinders als auch der Deckenstruktur geeignet ist, hohe Innendrücke aufzunehmen.

Die kombinierte Bewehrung des Betons mit Betonstahlstäben und Stahlfasern wirkt sich besonders günstig auf das mechanische Verhalten des Betons aus. Vor allem wird ein positiver Einfluß der Stahlfasern bei Zugbeanspruchungen beobachtet. Gegenüber faserfreiem Beton kann zudem die Zugfestigkeit in einem engen Bereich eingestellt werden. Auch sind die in dem faserverstärkten Beton auftretenden Risse wesentlich kleiner und günstiger verteilt, als dies bei normalem ausschließlich stabstahlbewehrten Beton der Fall ist. Dies ist auch im Hinblick auf die Rißsicherheit bei Verwendung von Stabstahlbewehrungen mit besonders großem Durchmesser vorteilhaft. Auch ist durch die risseverteilende Wirkung des faserverstärkten Betons die Korrosionsgefahr für die Bewehrung deutlich verringert. Darüber hinaus sind die konstruktiven Schwierigkeiten in Störzonen, wie beispielsweise Verankerungen der metallischen Auskleidung durch Bolzen, Verankerungen von Einbauteilen sowie Rohrdurchführungen, wesentlich geringer. Auch ist es möglich, die Betonzusammensetzung für den faserverstärkten Beton, insbesondere mit Stahlfasern, so einzustellen, daß selbst bei erschwerten Einbaubedingungen in komplizierten Bauwerksbereichen ein entmischungsfreies Einbringen und ein ausreichendes Verdichten gelingt. Selbstverständlich kann auch mit pumpfähigem faserbewehrtem Beton gearbeitet werden.

Der Anteil der metallischen Fasern an dem Beton wird je nach betrieblicher Anforderung des Druckbehälters gewählt und kann beispielsweise zwischen 40 kg und 125 kg pro Kubikmeter betragen. Zur weiteren Verbesserung der Aufnahme von Zugspannungen dienen Betonstahlstäbe. Beispielsweise weisen die Betonstahlstäbe einen Durchmesser von 32 mm bis 70 mm, insbesondere 50 mm, auf. Durch Kombination einer Bewehrung aus Stahlfasern und Betonstahlstäben erhält man Bauteile, die eine besonders hohe Biegetragfähigkeit und ein gutes Schubtragverhalten aufweisen.

Das Verhältnis des Durchmessers des Innenzylinders zu dem Durchmesser des Außenzylinders, bezogen auf die äußeren Oberflächen, kann 0,3 bis 0,8, vorzugsweise 0,6, betragen. Hierdurch wird ein Ringraum gebildet, der geeignet ist, insbesondere bei einer Siedewasser-Kernkraftanlage die sogenannte Kondensationskammer sowie ein Flutbecken zur Flutung des Innenzylinders mit einem jeweils erforderlichen Volumen unterzubringen. Der Ringraum wird außerdem so bemessen, daß darin weitere Anlagenräume angeordnet werden können.

Durch die insbesondere kreisringförmig ausgestaltete Zwischendecke wird eine hohe Aussteifung des Druckbehälters erreicht. Eine Zwischendecke, welche in einer Siedewasser-Kernkraftanlage den Boden der Kondensationskammer bildet, kann vorteilhafterweise an ihrer der Kondensationskammer zugewandten Oberseite torusförmig gewölbt sein. Mit einer derartigen Formgebung können dynamische Beanspruchungen infolge einer in der Kondensationskammer befindlichen und vertikal schwingenden Wassermasse besonders gut aufgenommen werden.

Die Zwischendecke ist vorzugsweise in einer Höhe von etwa 0,3 bis 0,7 der Gesamthöhe des Druckbehälters angeordnet. Mit einer doppelwandigen und zellenartigen Form des Druckbehälters ist bei einer dünnwandigen Ausbildung des Innenzylinders und des Außenzylinders, der Bodenplatte sowie der Deckenstruktur und einer Zwischendecke oder mehreren Zwischendecken ein Gesamttragwerk mit vergleichsweise geringen und gut ausgeglichenen Beanspruchungen selbst bei erhöhten Innendruckbeanspruchungen möglich. Die Verbindung zwischen dem Innenzylinder und dem Außenzylinder mit der Deckenstruktur, der Bodenplatte sowie einem Zwischenboden erfolgt vorzugsweise biegesteif. Durch die doppelwandige und zellenartige Ausbildung des Druckbehälters ist dieser besonders platzsparend herstellbar.

Der Ringraum ist zumindest teilweise mit einer metallischen Dichtstruktur ausgekleidet, welche mit Verbindungsmitteln, wie beispielsweise Kopfbolzenanker, mit dem Stahlbeton verbunden ist. Die metallische Dichtstruktur, insbesondere ein Stahlliner, ist vorzugsweise in Bereichen des Ringraumes angeordnet, die für die Aufnahme von Wasser vorgesehen sind und bildet somit eine dichte Schutzschicht zwischen Beton und Wasser.

Durch die Verbindung der metallischen Dichtstruktur mit der faserverstärkten Betonstruktur ist eine gute Übertragung von Kräften zwischen der Dichtstruktur und der Betonstruktur gewährleistet. Zusätzlich werden Zugkräfte durch die metallische Dichtstruktur aufgenommen, die zu diesem Zweck dicker ausgebildet sein kann als es die Dichtfunktion erfordert. Die Dichtstruktur besteht aus Stahlblech. Durch Verwendung von Stahlblech mit einer Stärke von mindestens 10 mm, insbesondere 20 mm, wird erreicht, daß die daraus gebildete Struktur gasdicht ist und auch eine tragende Funktion Übernehmen kann.

Aufgrund der zugleich lastabtragenden Eigenschaft der Dichtstruktur kann diese beim Aufbringen der Betonstruktur als Schalung verwendet werden. Hierdurch wird insbesondere die Herstellung großer Behälter deutlich vereinfacht. Die Steifigkeit der Dichtstruktur ist so groß, daß die in einzelnen Betonierabschnitten auftretenden Betondrücke ohne weitere Aussteifungen aufgenommen werden können. Als Mittel zum Verbinden der Dichtstruktur mit dem faserverstärkten Beton können bekannte Verankerungselemente, wie Kopfbolzendübel, Metallanker etc., eingesetzt werden.

Die Bodenplatte des Druckbehälters besteht vorzugsweise aus einer ebenen oder einer an der Oberseite gekrümmten, insbesondere kuppelartig konvex nach oben gewölbten, Platte. Die Deckenstruktur des Druckbehälters ist eine kreisringförmige Platte, die an ihrer der Bodenplatte zugewandten Seite kuppelartig konvex nach unten gewölbt ist. Der Innenzylinder dient der Aufnahme des Reaktordruckbehälters, die Öffnung in der Deckenplatte dem Be- und Entladen des Reaktordruckbehälters mit Brennelementen. Die Öffnung ist mit einem Deckel verschließbar, der aus einer Stahlkonstruktion besteht, welche biegesteif und gasdicht mit der kreisringförmigen Deckenplatte verbindbar ist.

Der Druckbehälter eignet sich vorzugsweise als Sicherheitsbehälter einer Kernkraftanlage, wie einer Siedewasser-Kernkraftanlage oder einer Druckwasser-Kernkraftanlage. Bei Leichtwasser-Kernkraftanlagen mit einem Sicherheitskonzept, bei dem die Funktionstüchtigkeit und Zuverlässigkeit der Kernkraftanlage durch einfache und unempfindliche Sicherheitseinrichtungen gewährleistet wird und die selbst bei einem äußerst unwahrscheinlichen Störfall integer bleiben sollen, sind durch den Sicherheitsbehälter auftretende Innendrücke bis zu einer Größenordnung von etwa 20 bar sicher aufzunehmen. Um eine besonders kompakte Ausführung einer solchen Kernkraftanlage zu erreichen, ist eine relativ dünnwandige Baustruktur anzustreben. Dies wird durch die Betonstruktur mit faserverstärktem und stabstahlbewehrtem Stahlbeton ohne Vorspannung erreicht. Zusätzlich ist die metallische Dichtstruktur zur gasdichten Ausführung des Sicherheitsbehälters vorgesehen, die mit einer entsprechenden Wandstärke ausgeführt ist, um eine Tragfunktion übernehmen zu können. Sie ist mit der Betonstruktur kraftschlüssig verbunden.

Der erfindungsgemäße Druckbehälter eignet sich allgemein zur Aufnahme von unter hohem Druck stehenden Fluid, beispielsweise in einer chemischen Prozeßanlage oder einem Flüssigkeitsspeicher.

Anhand der weitgehend schematischen und nicht maßstäblichen Zeichnung wird der Druckbehälter näher erläutert.

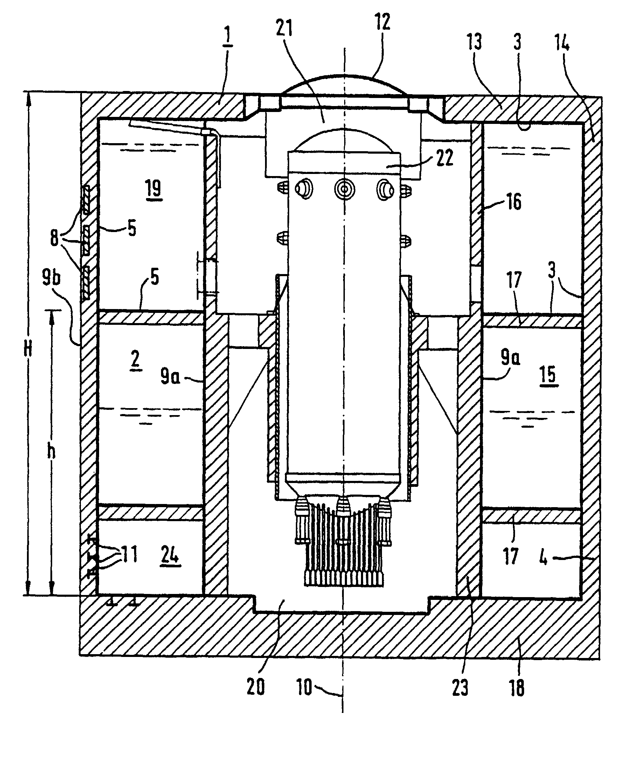

FIG 1 zeigt in einem Längsschnitt einen Druckbehälter einer Siedewasser-Kernkraftanlage. Der Sicherheitsbehälter 1 ist kreiszylinderisch aufgebaut und erstreckt sich entlang einer Mittelachse 10. Unmittelbar um die Mittelachse 10 herum ist ein Druckraum 20 gebildet, der den Reaktordruckbehälter 22 der Siedewasser-Kernkraftanlage aufnimmt. Im geodätisch oberen Bereich des Druckraums 20 ist eine Beladeöffnung 21 vorgesehen, die durch ein Beladedeckel 12 verschlossen ist. Der Druckraum 20 ist von einer zylindrischen, entlang der Mittelachse 10 gestreckten Wand 23 umgeben, die einen Innenzylinder 16 bildet. Die Wand 23 besteht aus einem mit Stahlfasern und Betonstabstahl bewehrten Beton. Zwischen dem Innenzylinder 16 und einem den Innenzylinder 16 umschließenden Außenzylinder 14 sind ein ringraumförmiger Anlagenraum 24, eine ringraumförmige Kondensationskammer 15 sowie ein ebenfalls ringraumförmiges Flutbecken 19 angeordnet. Das Flutbecken 19 liegt geodätisch am höchsten, darunter schließt sich die Kondensationskammer 15 an, welche bis etwa zur Hälfte mit Wasser gefüllt sein kann, und darunter liegt der Anlagenraum 24. Der Sicherheitsbehälter 1 weist eine gasdichte Dichtstruktur 3 auf, welche aus Stahlblech 5 besteht. Die Dichtstruktur 3, welche im folgenden auch als Stahlliner 3 bezeichnet wird, befindet sich an der Innenseite 25 des Außenzylinders 14 und der äußeren Oberfläche 9a des Innenzylinders 16. Der Stahlliner 3 ist von einer mit Stahlfasern und Betonstabstahl bewehrten Betonstruktur 4 umgeben, die die Bodenplatte 18 des Sicherheitsbehälters 1, den Außenzylinder 14 sowie die Decke 13 des Sicherheitsbehälters 1 bildet. Der Stahlliner 3 ist über Kopfbolzendübel 11 oder andere Verbindungselemente, wie Stahlanker, fest mit der Betonstruktur 4 verbunden. Er verläuft zudem an der äußeren Oberfläche 9a der Wand 23 sowie am Boden 17 der Kondensationskammer 15. Darüber hinaus dient er als vollständige Auskleidung für das Flutbecken 19. Der Stahlliner 3 hat eine Wandstärke von etwa 20 mm und ist somit in der Lage, bei sehr hohen Drücken von beispielsweise bis zu 20 bar, in dem Druckraum 20 sowie der Kondensationskammer 15, die entstehenden Zugkräfte im Verbund mit der faser- und stabstahlbewehrten Betonstruktur 4 aufzunehmen.

## Patentansprüche

1. Druckbehälter (1) mit einer Betonstruktur (4), die eine Bodenplatte (18), eine Deckenstruktur (13), einen Innenzylinder (16) sowie einen den Innenzylinder (16) umschließenden Außenzylinder (14) aufweist, wobei zwischen dem Innenzylinder (16) und dem Außenzylinder (14) ein Ringraum (2) gebildet ist, und der Innenzylinder (16) und der Außenzylinder (14) jeweils auf der Bodenplatte (18) angeordnet sind und sich jeweils entlang einer Mittelachse (10) erstrecken, und wobei der Außenzylinder (14) sowie der Innenzylinder (16) mit der Deckenstruktur (13) kraftschlüssig und lasttragend verbunden sind, und in dem Ringraum (2) mindestens eine Zwischendecke (17) kraftschlüssig und lasttragend mit dem Innenzylinder (16) und dem Außenzylinder (14) verbunden ist, dadurch gekennzeichnet, daß die Betonstruktur (4) eine Bewehrung aus weitgehend regellos zueinander angeordneten metallischen Fasern und Betonstahlstäben (8) aufweist.

2. Druckbehälter (1) nach Anspruch 1, bei dem die Durchmesser der äußeren Kontur des Innen- und Außenzylinders ein Verhältnis von 0,3 bis 0,8, vorzugsweise 0, 6, bilden.

3. Druckbehälter (1) nach Anspruch 1 oder 2, der eine Gesamthöhe H hat und bei dem der Zwischenboden (17) in einer Höhe h geodätisch oberhalb der Bodenplatte (18) angeordnet ist, wobei das Verhältnis h/H zwischen 0,3 und 0,7 beträgt.

4. Druckbehälter (1) nach einem der vorhergehenden Ansprüche, wobei der Ringraum (2) mindestens teilweise mit einer metallischen Dichtstruktur (3) ausgekleidet ist.

5. Druckbehälter (1) nach Anspruch 4, bei dem die metallische Dichtstruktur (3) als Schalung für den Beton ausgebildet ist.

6. Druckbehälter (1) nach einem der vorhergehenden Ansprüche, wobei die Deckenstruktur (13) eine verschließbare Be- und Entladeöffnung (21) aufweist.

7. Druckbehälter (1) nach einem der vorhergehenden Ansprüche, wobei die Bodenplatte (18) und/oder die Deckenstruktur (13) gekrümmt, insbesondere kuppelförmig, ist bzw. sind.

8. Druckbehälter (1) nach einem der vorher gehenden Ansprüche, der ein Sicherheitsbehälter (10) einer Kernkraftanlage, insbesondere einer Siedewasser-Kernkraftanlage ist.

9. Verwendung eines Druckbehälters (1) nach einem der Ansprüche 1 bis 8 zur Aufnahme von unter hohem Druck stehendem Fluid.

## Claims

1. Pressure vessel (1) with a concrete structure (4) which has a bottom plate (18), a ceiling structure (13), an inner cylinder (16) and an outer cylinder (14) surrounding the inner cylinder (16), an annular space (2) being formed between the inner cylinder (16) and the outer cylinder (14), the inner cylinder (16) and the outer cylinder (14) each being arranged on the bottom plate (18) and each extending along a mid-axis (10), the outer cylinder (14) and the inner cylinder (16) being connected to the ceiling structure (13) non-positively and in a load-bearing manner, and at least one intermediate ceiling (17) being connected to the inner cylinder (16) and the outer cylinder (14) in the annular space (2) non-positively and in a load-bearing manner, characterized in that the concrete structure (4) has a reinforcement composed of metallic fibres, arranged essentially irregularly in relation to one another, and of reinforcing-steel bars (8).

2. Pressure vessel (1) according to Claim 1, in which the diameters of the outer contour of the inner and outer cylinders form a ratio of 0.3 to 0.8, preferably 0.6.

3. Pressure vessel (1) according to Claim 1 or 2, which has a total height H and in which the intermediate floor (17) is arranged at a geodetic height h above the bottom plate (18), the ratio h/H being between 0.3 and 0.7.

4. Pressure vessel (1) according to one of the preceding claims, the annular space (2) being lined at least partially with a metallic sealing structure (3).

5. Pressure vessel (1) according to Claim 4, in which the metallic sealing structure (3) is designed as formwork for the concrete.

6. Pressure vessel (1) according to one of the preceding claims, the ceiling structure (13) having a closeable loading and unloading orifice (21).

7. Pressure vessel (1) according to one of the preceding claims, the bottom plate (18) and/or the ceiling structure (13) being curved, in particular dome-shaped.

8. Pressure vessel (1) according to one of the preceding claims, which is a containment vessel (1 ) of a nuclear power plant, in particular of a boiling water nuclear power plant.

9. Use of a pressure vessel (1) according to one of Claims 1 to 8 for receiving fluid which is under high pressure.

## Revendications

1. Cuve (1) sous pression, comportant une structure (4) en béton qui comprend une dalle (18) de fond, une structure (13) de plafond, un cylindre (16) intérieur et un cylindre (14) extérieur entourant le cylindre (16) intérieur, un espace (2) annulaire étant formé entre le cylindre (16) intérieur et le cylindre (14) extérieur, le cylindre (16) intérieur et le cylindre (14) extérieur étant respectivement disposés sur la dalle (18) de fond et s'étendant respectivement le long d'un axe (10) médian, et le cylindre (14) extérieur ainsi que le cylindre (16) intérieur étant assemblés par une liaison à force et porteuse de charge à la structure (13) de plafond et, dans l'espace (2) annulaire, au moins un plafond (17) intermédiaire étant assemblé par une liaison à force et porteuse de charge au cylindre (16) intérieur et au cylindre (14) extérieur, caractérisée en ce que la structure (4) en béton comporte une armature constituée de barres (8) d'acier pour béton et de fibres métalliques disposées de façon essentiellement irrégulière.

2. Cuve (1) sous pression suivant la revendication 1, dans laquelle les diamètres des contours extérieurs du cylindre intérieur et du cylindre extérieur se trouvent dans un rapport de 0,3 à 0,8, de préférence de 0,6.

3. Cuve (1) sous pression suivant la revendication 1 ou 2, qui possède une hauteur H totale et dans laquelle le plafond (17) intermédiaire est disposé à une hauteur h géodésique au-dessus de la dalle (18) de fond, le rapport h/H étant compris entre 0,3 et 0,7.

4. Cuve (1) sous pression suivant l'une des revendications précédentes, l'espace (2) annulaire étant habillé au moins partiellement d'une structure (3) d'étanchéité métallique.

5. Cuve (1) sous pression suivant la revendication 4, dans laquelle la structure (3) d'étanchéité est conçue comme coffrage pour le béton.

6. Cuve (1) sous pression suivant l'une des revendications précédentes, la structure (13) de plafond comportant une ouverture (21) de chargement et déchargement qui peut être fermée.

7. Cuve (1) sous pression suivant l'une des revendications précédentes, la dalle (18) de fond et/ou la structure (13) de plafond étant cintrées, notamment en forme de coupole.

8. Cuve (1) sous pression suivant l'une des revendications précédentes, qui est une cuve (1) de sécurité d'une centrale nucléaire, notamment d'une centrale nucléaire à eau bouillante.

9. Utilisation d'une cuve (1) sous pression suivant l'une des revendications 1 à 8 pour recevoir un fluide sous haute pression.
